# EUROPEAN PATENT APPLICATION

(11) **EP 4 491 683 A1**
(43) Date of publication of application: **15.01.2025**
(21) Application number: 23766480.0
(22) Date of filing: 16.02.2023
(51) Int. Cl.: C09D 11/36, C09D 11/40, B41M 5/00, C09B 57/00, C09B 67/20, B41J 2/01

(54) **NONAQUEOUS INK COMPOSITION, INK SET, RECORDING METHOD EMPLOYING SAME, METHOD FOR PRODUCING RECORD, RECORD, AND INK-JET RECORDING DEVICE**

(30) Priority: 09.03.2022 JP 2022035864
(71) Applicant: DNP Fine Chemicals Co., Ltd., Yokohama-shi, Kanagawa 226-0022 (JP)
(72) Inventor: YAMAZAKI Fumie, Yokohama-shi, Kanagawa 226-0022 (JP); YOSHIMORI Keishiro, Yokohama-shi, Kanagawa 226-0022 (JP); ORIKASA Yuka, Yokohama-shi, Kanagawa 226-0022 (JP); TAMURA Mitsuyoshi, Yokohama-shi, Kanagawa 226-0022 (JP)
(74) Representative: Hasegawa, Kan
(86) International application number: PCT/JP2023/005546
(87) International publication number: WO 2023/171300

(57) **Abstract**

Provided is a nonaqueous ink composition which contains a diketopyrrolopyrrole-based pigment and is nevertheless suitable for use as a nonaqueous ink composition to be ejected by an ink-jet method. The nonaqueous ink composition, which is to be ejected by an ink-jet method, comprises a pigment, a pigment dispersant, an organic solvent, and a resin, wherein the pigment includes a pigment A represented by formula (1) and the content of the pigment dispersant is lower than the content of the pigment. 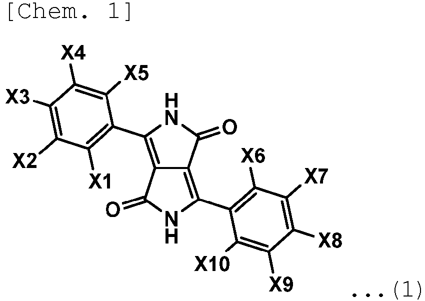 (In formula (1), X1 to X10 each independently represent a hydrogen atom, a halogen atom, an optionally branched C1-C5 alkyl group, an aromatic hydrocarbon group in which the hydrogen atoms may have been replaced, a cyano group, a nitro group, an amino group, -OH, -COOH, -COO⁻M⁺, -SO₃H, -SO₃⁻M⁺, a phthalimide group in which the hydrogen atoms may have been replaced, a phthalimidomethyl group, or a heterocyclic compound, and M⁺ represents a cation.)

## Description

### TECHNICAL FIELD

The present invention relates to a non-aqueous ink composition, an ink set, a recording method using the non-aqueous ink composition and the ink set, a method for producing a recorded matter, a recorded matter, and an inkjet recording device.

### BACKGROUND ART

As the ink composition, aqueous ink compositions in which a color material is dissolved or dispersed in water or a mixture of water and an organic solvent, and non-aqueous ink compositions in which the color material is dissolved or dispersed in an organic solvent that does not contain water are widely used.

For example, Patent Document 1 discloses a non-aqueous ink composition containing a diketopyrrolopyrrole pigment as a pigment, an organic solvent, and an inorganic metal, and a non-aqueous ink composition containing a predetermined amount of a metal element. In Patent Document 1, the non-aqueous ink composition is described as exhibiting good saturation in the yielded recorded matter and having good storage stability.

### Citation List

### Patent Document

Patent Document 1: Japanese Unexamined Patent Application, Publication No. 2017-132891

### DISCLOSURE OF THE INVENTION

### Problems to be Solved by the Invention

Because diketopyrrolopyrrole pigments are weather resistant, ink compositions containing diketopyrrolopyrrole pigments are particularly suitable for producing a recorded matter used outdoors.

However, research conducted by the present inventors has revealed that a non-aqueous ink composition containing a diketopyrrolopyrrole pigment tends to have poor ejection performance and poor storage stability, and thus may not satisfy the characteristics required for a non-aqueous ink composition ejected by an inkjet method. That is, the non-aqueous ink composition may have impaired glossiness and coating film resistance on the printed surface of the resulting printed material.

It is an object of the present invention to provide a non-aqueous ink composition that, even when containing a diketopyrrolopyrrole pigment, can be suitably used as a non-aqueous ink composition ejected by an inkjet method.

### Means for Solving the Problems

As a result of diligent study to solve the above problem, the present inventors found that the above problem can be solved by setting the content of pigment and pigment dispersant within a specified range. Specifically, the present invention provides the following.

(1) A non-aqueous ink composition to be ejected by an inkjet method, the composition containing a pigment, a pigment dispersant, and an organic solvent, and a resin, in which the pigment contains a pigment A represented by Formula (1), and
   a content of the pigment dispersant is smaller than a content of the pigment. 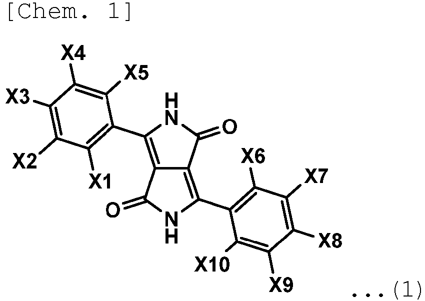 (in Formula (1), X1 to X10 each independently represent a hydrogen atom, a halogen atom, an optionally branched alkyl group having 1 to 5 carbon atoms, or an aromatic hydrocarbon group in which a hydrogen atom may be substituted, a cyano group, a nitro group, an amino group, -OH, -COOH, -COO-M⁺, - SO₃H, -SO₃⁻M⁺, a phthalimido group in which a hydrogen atom may be substituted, a phthalimidomethyl group, or a heterocyclic compound, and M⁺ represents a cation.)
(2) The non-aqueous ink composition described in (1), in which
   a content of the resin is larger than the content of the pigment.
(3) The non-aqueous ink composition described in (1) or (2), in which
   the content of the pigment is 1.0 mass% or more.
(4) The non-aqueous ink composition described in any one of (1) to (3), in which
   the content of the resin is larger than a content of the pigment dispersant.
(5) The non-aqueous ink composition described in any one of (1) to (4), in which ((content of the pigment dispersant)/(content of the resin)) is less than 0.8.
(6) The non-aqueous ink composition described in any one of (1) to (5), in which
   the content of the resin is larger than a total content of the pigment and the pigment dispersant.
(7) The non-aqueous ink composition described in any one of (1) to (6), in which
   the content of the resin is larger than a total content of the pigment, the pigment dispersant, and a surfactant.
(8) The non-aqueous ink composition described in any one of (1) to (7), in which
   ((total content of the pigment dispersant and the surfactant)/(content of the resin)) is 0.3 or more and less than 1.0.
(9) The non-aqueous ink composition described in any one of (1) to (8), in which
   the content of the pigment A
   is 0.1 mass% or more and 8.0 mass% or less of a total mass of the non-aqueous ink composition.
(10) The non-aqueous ink composition described in any one of (1) to (9), in which
   a content of water in the non-aqueous ink composition is 0.5 mass% or less.
(11) A recording method, including ejecting the non-aqueous ink composition described in any one of (1) to (10) onto a surface of a base material using an inkjet method.
(12) A method of producing a recorded matter, including ejecting the non-aqueous ink composition described in any one of (1) to (10) onto a surface of a base material using an inkjet method.
(13) An ink set comprising at least the non-aqueous ink composition described in any one of (1) to (10).
(14) A recorded matter including a print layer of the non-aqueous ink composition described in any one of (1) to (10) formed on a surface of a base material.
(15) An inkjet recording device including a storage container filled with the non-aqueous ink composition described in any one of (1) to (10).

### Effects of the Invention

The non-aqueous ink composition according to the present invention satisfies the characteristics required for a non-aqueous ink composition ejected by an inkjet method, even when a pigment containing a diketopyrrolopyrrole pigment is used as the pigment.

### PREFERRED MODE FOR CARRYING OUT THE INVENTION

Specific embodiments of the present invention will be described in detail below. The present invention is not limited to the following embodiments and may be implemented with modifications as appropriate within the scope of the object of the invention.

### <<1. Non-aqueous Ink Composition>>

A non-aqueous ink composition according to the present embodiment is a non-aqueous ink composition ejected by an inkjet method and contains a pigment, a pigment dispersant, an organic solvent, and a resin. Here, "non-aqueous ink composition" means an ink composition containing an organic solvent that is manufactured without intentionally containing water, unlike a water-based ink composition that mainly contains water.

The pigment in the non-aqueous ink composition contains a pigment A indicated by the following Formula (1). The content of the pigment dispersant included in the non-aqueous ink composition is smaller than the content of the pigment included in the non-aqueous ink composition. 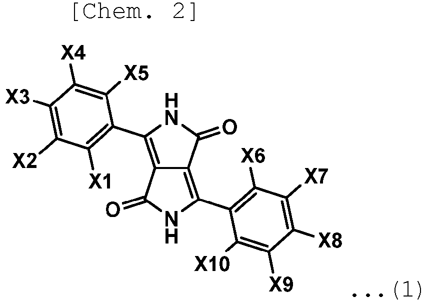 (In Formula (1), X1 to X10 are each independently a hydrogen atom, a halogen atom, an optionally branched alkyl group having 1 to 5 carbon atoms, or an aromatic hydrocarbon group in which a hydrogen atom may be substituted with a hydrogen atom, a cyano group, a nitro group, an amino group, -OH, - COOH, -COO-M⁺, -SO₃H, -SO₃⁻M⁺, a phthalimido group in which a hydrogen atom may be substituted, a phthalimidomethyl group, or a heterocyclic compound, and M⁺ indicates a cation.)

Since the content of the pigment dispersant is smaller than the content of the pigment (less than the content of the pigment), the non-aqueous ink composition can satisfy the characteristics required for a non-aqueous ink composition ejected by an inkjet method, such as improved glossiness and coating film resistance on a printed surface of a resulting printed material.

The content of moisture in the non-aqueous ink composition according to the present embodiment is preferably 0.5 mass% or less, more preferably 0.3 mass% or less, and even more preferably 0.1 mass% of the total non-aqueous ink composition. Since the pigment A is highly hydrophobic, the dispersibility of the pigment in the non-aqueous inkjet composition containing this pigment tends to deteriorate relatively easily upon contact with water, and thus storage stability readily deteriorates. By reducing the content of moisture in the non-aqueous ink composition such that the non-aqueous ink composition contains as little moisture as possible (moisture is intentionally excluded), it is possible to improve characteristics such as storage stability and cleaning recovery.

Next, each component in the non-aqueous ink composition is described.

### [Pigment]

The non-aqueous ink composition according to the present embodiment contains a pigment. The pigment is characterized in that it contains a pigment A represented by the following Formula (1). 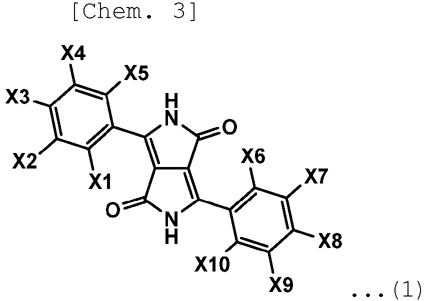 (in Formula (1), X1 to X10 each independently represent a hydrogen atom, a halogen atom, an optionally branched alkyl group having 1 to 5 carbon atoms, or an aromatic hydrocarbon group in which a hydrogen atom may be substituted, a cyano group, a nitro group, an amino group, -OH, -COOH, -COO-M⁺, - SO₃H, -SO₃⁻M⁺, a phthalimido group in which a hydrogen atom may be substituted, a phthalimidomethyl group, or a heterocyclic compound, and M⁺ represents a cation.)

The pigment A has weather resistance. Thus, it is possible to improve the weather resistance of a printed material obtained using the non-aqueous ink composition containing the pigment A. Moreover, since the content of the pigment dispersant is smaller than the content of the pigment, it is possible to meet the characteristics required for a non-aqueous ink composition ejected by an inkjet method.

Substituents (X1 to X10) in the benzene ring in the molecular structure of the pigment A may be changed as needed. An example of a method for changing the type of substituent (X1 to X10) is dispersing the pigment in an organic solvent and introducing the desired substituent by using an additive capable of introducing a specific substituent. For example, the pigment can be prepared by the method described in Patent No. 2993392. When changing the type of the substituent (X1 to X10) in the benzene ring, any of the 10 substitution positions in the benzene ring can be used and the number of substituents is not particularly limited.

The average particle size of the pigment A is not particularly limited, but the upper limit of a cumulative volume-based 90% particle size D90 is preferably 500 nm or less, preferably 450 nm or less, and more preferably 400 nm. With this particle size, storage stability and inkjet ejection performance improve, and the non-aqueous ink composition can be more suitably used as a non-aqueous ink composition ejected by an inkjet method. The lower limit of the volume-based cumulative 90% particle size D90 is preferably 50 nm or more, and preferably 100 nm or more. By setting the volume-based cumulative 90% particle size D90 of the pigment A in such a range, the storage stability of the non-aqueous ink composition can be improved.

Note that, herein, "volume-based cumulative 90% particle size D90" means a particle size at which the cumulative volume calculated from the small diameter side is 90%. To measure the "volume-based cumulative 90% particle size D90", a particle size distribution analyzer (examples thereof include NANOTRACWAVE, a particle size analyzer manufactured by Microtrac Bell Corporation, and FPAR-1000, a particle size analyzer manufactured by Otsuka Electronics Co.) can be used.

The content of the pigment A is not particularly limited, but the lower limit of the content of the pigment A is preferably 0.1 mass% or more, more preferably 0.3 mass% or more, even more preferably 0.5 mass% or more, even more preferably 1.0 mass% or more, particularly preferably 2.0 mass% or more, and most preferably 3.0 mass% or more of the total non-aqueous ink composition. When the content of the pigment A is 0.1 mass% or more of the total non-aqueous ink composition, print density can be improved and the color gamut of the recorded matter obtained by combining the non-aqueous ink composition with a non-aqueous ink composition of another color can be improved. The upper limit of the content of the pigment A is preferably 8.0 mass% or less, more preferably 6.0 mass% or less, and even more preferably 5.0 mass% or less. When the content of the pigment A is 8.0 mass% or less of the total non-aqueous ink composition, the content of other additives can be relatively increased to improve the dispersion stability of the pigment A. Furthermore, an increase in viscosity caused by increasing the content of the pigment A can be suppressed, which can help prevent the nozzle of the inkjet printhead from clogging.

The pigment A represented by Formula (1) can be C.I. Pigment Red 254, C.I. Pigment Red 255, C.I. Pigment Red 264, C.I. Pigment Red 270, C.I. Pigment Red 272, C.I. Pigment Red 283, C.I. Pigment Red 291, C.I. Pigment Orange 71, C.I. Pigment Orange 73, C.I. Pigment Orange 81, and the like. Further, the pigment A represented by Formula (1) may be synthesized. For example, the pigment may be obtained by treating the surface of a commercially-available diketopyrrolopyrrole pigment by washing with a solution (acid solution, alkaline solution, or neutral solution), by changing the type of substituent (X1 to X10) in the benzene ring in the structure of Formula (1), or by both treatments. Examples of the commercially-available product include IRGAPHOR RED BT-CF and CROMOPHTAL DPP Red BP (C.I. Pigment Red 254) manufactured by BASF, CHROMOFINE RED 6156EC (both C.I. Pigment Red 254) manufactured by Dainichi Seika Kogyo Co., PigmentRed254 (C.I. Pigment Red 254) manufactured by Tokyo Chemical Industry, CinilexDPP Red SR-2P (C.I. Pigment Red 254) manufactured by CINIC, CROMOPHTAL DPP ORANGE TR manufactured by BASF, IRAGIN ORANGE D2905, (C.I. Pigment Orange 71), and Irgazin Orange L 2990 HD (C.I. Pigment Orange 73) manufactured by BASF.

The non-aqueous ink composition according to the present embodiment may further contain a color material (including pigments and dyes) other than the pigment A described above. Examples of the color material include pigments and dyes of hues similar to that of pigment A (e.g., orange, magenta, yellow, red). In this case, the content of all pigments including the pigment A is preferably 1.0 mass% or more, particularly preferably 2.0 mass% or more, and most preferably 3.0 mass% or more.

Examples of the organic pigment other than pigment A described above include, exemplified by their color index (C.I.) numbers: C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214, C.I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 269, C.I. Pigment Orange 16, 36, 43, 51, 55, 59, 61, 64, C.I. Pigment Violet 19, 23, 29, 30, 37, 40, 50, and C.I. Pigment Brown 23, 25, 26.

The content of the pigment A described above in the total amount of pigment contained in the non-aqueous ink composition is preferably 50 mass% or more, more preferably 70 mass% or more, and even more preferably 90 mass% or more.

### [Pigment Dispersant]

The non-aqueous ink composition according to the present embodiment contains a pigment dispersant. The content of the pigment dispersant is smaller than the content of the pigment contained in the non-aqueous ink composition. This makes it possible to suppress aggregation of a diketopyrrolopyrrole pigment contained in the non-aqueous ink composition and to satisfy the characteristics required for a non-aqueous ink composition ejected by an inkjet method, such as improved glossiness on the printed surface of the resulting printed matter.

The content of the pigment dispersant is preferably 5.0 mass% or less of the total non-aqueous ink composition, more preferably 3.0 mass% or less, and even more preferably 2.0 mass% or less. The content of the pigment dispersant is preferably 0.1 mass% or more, more preferably 0.2 mass% or more, even more preferably 0.3 mass% or more, particularly preferably 0.5 mass% or more, and most preferably 1.0 mass% or more of the total non-aqueous ink composition.

Any dispersant used in the non-aqueous ink composition can be used as the pigment dispersant. A polymer dispersant is preferably used as the pigment dispersant. Polymer dispersants are dispersants in which the main chain consists of polyester, polyacrylic, polyurethane, polyamine, or polycaprolactone, and the side chain has a polar group such as an amino group, a carboxyl group, a sulfone group, and a hydroxyl group. Among these, using a non-aqueous ink composition containing a polycaprolactone-based polymer dispersant as the polymer dispersant makes it possible to inhibit the aggregation of the diketopyrrolopyrrole pigment in the non-aqueous ink composition more effectively.

As a polycaprolactone-based polymer dispersant, for example, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by BYK), Efka PX4310, PX4320, PX4330, PA4401, 4402, PA4403, 4570, 7411, 7477, PX4700, PX4701 (manufactured by BASF), TREPLUS D-1200, D-1410, D-1420, MD-1000 (manufactured by Otsuka Chemical Co., Ltd.), and Florene DOPA-15BHFS, 17HF, 22, G-700, 900, NC-500, GW-1500 (manufactured by Kyoeisha Chemical Co., Ltd.) may be used. As the polycaprolactone-based dispersant, for example, Azisper PB821, PB822, PB881 (manufactured by Ajinomoto Fine Techno Co., Ltd.), Hinoact KF-1000, T-6000, T-7000, T T-8000, T-8000E, T-9050 (manufactured by Kawaken Fine Chemical Co., Ltd.), Solsperse 20000, 24000, 32000, 32500, 32550, 32600, 33000, 33500, 34000, 35200, 36000, 37500, 39000, 47000, 71000, 76400, 76500, 86000, 88000, J180, J200 (manufactured by The Lubrizol Corporation), and TEGO Dispers 652, 655, 685, 688, 690 (Evonik Japan Inc.) can be used. Preferred dispersants include BYKJET-9130, 9131, 9132, 9133, 9151, EfkaPX4310, PX4320, PX4330, PX4700, PX4701, Solsperse 20000, 24000, 32000, 33000, 33500, 34000, 35200, 39000, 47000, 71000, 76500, 86000, 88000, J180, J200, and TEGO Dispersers 655, 685, 688, 690 can be used. These alone or mixtures thereof can be used.

Especially when the substituent (X1 to X10) in the benzene ring in the molecular structure of the pigment A are introduced to make the non-aqueous ink composition acidic to weakly basic, a pigment dispersant with a basic group among those described above is preferably used. By using a pigment dispersant with a basic group, the aggregation of the pigment A in the non-aqueous ink composition can be suppressed.

Among these, it is preferable to use a pigment dispersant with an amine value in a range of 20 mg KOH/g to 100 mg KOH/g. Aggregation of the pigment A in the non-aqueous ink composition can be more effectively suppressed. Particularly when the pH of the pigment A is 8 or less (preferably when the pH is 7 or less), the pigment dispersant having an amine value in the specified range more easily adheres to the surface of the pigment A, and thus the aggregation of the pigment A in the non-aqueous ink composition can be effectively suppressed.

These pigment dispersants preferably have a weight average molecular weight of 1,000 or more, more preferably 3,000 or more, and even more preferably 5,000 or more. Using a pigment dispersant having a high molecular weight makes it possible to effectively suppress the aggregation of the pigment A in the non-aqueous ink composition, which makes it possible to achieve good storage stability of the non-aqueous ink composition. Furthermore, good coating film resistance of the printed material can be obtained.

### [Dispersion Aid]

A dispersion aid may be used in the non-aqueous ink composition according to the present embodiment as needed. The dispersion aid adsorbs on the surface of the color material (pigment). The functional group of the dispersion aid increases affinity with the organic solvent and dispersant in the non-aqueous ink composition, thereby improving dispersion stability. Derivatives of the pigment listed above are preferred as the dispersion aid, and known pigment derivatives with functional groups such as acidic, basic, and neutral groups on the organic pigment residue can be used.

### [Resin]

The non-aqueous ink composition according to the present embodiment contains a resin. In addition to the content of the pigment dispersant being less than the content of the pigment, including the resin makes it possible to suppress the aggregation of the diketopyrrolopyrrole pigment contained in the non-aqueous ink composition, thereby enabling the non-aqueous ink composition to meet the characteristics required for a non-aqueous ink composition ejected by an inkjet method, such as improved abrasion resistance of the printed surface of the resulting printed material. Furthermore, by including the resin, fixability, water resistance, and stretchability of the recording layer formed by the non-aqueous ink composition can be improved. Herein, "resin" means a binder resin that mainly imparts chafe resistance to the recording layer (recorded matter), and is different from a dispersant (polymer dispersant) that contains a color material (pigment) and a polymer surfactant such as a surfactant having a siloxane skeleton.

The resin is not particularly limited and, for example, acrylic resins (including copolymers such as styrene-acrylic resins), polystyrene resins, polyester resins, vinyl chloride resins, vinyl acetate resins, vinyl chloride-vinyl acetate copolymer resins, polyethylene resins, polyurethane resins, rosin modified resins, phenolic resins, terpene resins, polyamide resins, vinyl toluene-α-methylstyrene copolymers, ethylene-vinyl acetate copolymers, cellulose resins (cellulose acetate butyrate, cellulose acetate propionate, etc.), silicone (silicon) resins, acrylamide resins, epoxy resins, or copolymer resins or mixtures thereof can be used. Among these, those containing acrylic resins, vinyl chloride resins, cellulose resins, polyester resins, or polyurethane resins are preferred.

Acrylic resins are not limited to those containing a (meth) acrylic ester monomer as the main component of the constituent monomer. The acrylic resin may be either a homopolymer of one type of radical polymerizable monomer or a copolymer of two or more selected radical polymerizable monomers. In particular, a preferable acrylic resin serving as the non-aqueous ink composition according to the present embodiment is a polymer of methyl methacrylate alone, or a copolymer of methyl methacrylate and at least one or more selected from the group consisting of butyl methacrylate, ethoxyethyl methacrylate, and benzyl methacrylate. Examples of commercially available (meth)acrylic resins include "PARALOID B99N", "PARALOID B60", "PARALOID B66", and "PARALOID B82" manufactured by Rohm and Haas.

The vinyl chloride-based resin may be either a homopolymer consisting of vinyl chloride monomers or a copolymer using two or more selected polymerizable monomers. An example of the copolymer for the vinyl chloride resin is a vinyl chloride-vinyl acetate copolymer resin. A vinyl chloride-vinyl acetate copolymer resin is a polymer of a vinyl chloride monomer and a vinyl acetate monomer. Examples of vinyl chloride-vinyl acetate copolymer resins include vinyl chloride-vinyl acetate copolymers, vinyl chloride/vinyl acetate/maleic acid copolymers, vinyl chloride/vinyl acetate/vinyl alcohol copolymers, vinyl chloride/vinyl acetate/hydroxyalkyl acrylate copolymers, and mixtures thereof. As the above-described vinyl chloride-vinyl acetate copolymer resin, "Solbin C", "Solbin CL", "Solbin CNL", "Solbin CLL", "Solbin CLL2", "Solbin C5R", "Solbin TA2", "Solbin TA3", "Solbin A", "Solbin AL", "Solbin TA5R", "Solbin M5", and the like from Nissin Chemical Co., Ltd. can be obtained and used under their trade names.

The vinyl chloride-vinyl acetate copolymer resin can be obtained by polymerizing a vinyl chloride monomer and a vinyl acetate monomer. The polymerization method can be any conventionally known polymerization method. The polymerization method is preferably emulsion polymerization or suspension polymerization, and more preferably suspension polymerization.

The cellulose-based resin is a resin having a cellulose backbone obtained by introducing functional groups biologically or chemically from cellulose. For example, cellulose-based resins include cellulose acetate alkylate resins such as cellulose acetate butyrate resin, cellulose acetate propionate resin, cellulose acetate propionate butyrate resin; cellulose acetate resin; nitrocellulose resin; and mixtures thereof. As the cellulose resin, "CAB551-0.01", "CAB551-0.2", "CAB553-0.4", "CAB531-1", "CAB381-0.1", "CAB381-0.5", "CAB381-2", "CAB381-20", "CAP504", "CAP482-0.5", and the like manufactured by Eastman Chemical Japan can be obtained and used under their trade names.

The polyester resin is a resin that contains at least a component unit obtained by polycondensation of an alcohol component with a carboxylic acid component. The polyester resin may also include modified polyester resins. As the polyester resin, "VYLON226", "VYLON270", "VYLON560", "VYLON600", "VYLON630", "VYLON660", "VYLON885", "VYLONGK250", "VYLONGK810", "VYLON GK890", and the like manufactured by TOYOBO Co. Ltd., and "elitleUE-3200", "elitleUE-3285", "elitleUE-3320", "elitleUE-9800", "elitleUE-9885", and the like manufactured by Unitika can be obtained and used under their trade names.

The polyurethane resin is a resin that contains at least a component unit obtained by copolymerizing an alcohol component and an isocyanate component. The polyurethane resin may also include polyurethane resins modified by polyesters, polyethers or caprolactones. As the polyurethane resin, "Uliano KL-424", "Uliano KL-564", "Uliano KL-593", and "Uliano 3262", and the like manufactured by Arakawa Chemical Industry Co., "PANDEX 372E", "PANDEX 390E", "PANDEX394E", "PANDEX 304", "PANDEX 305E", "PANDEX P-870", "PANDEX P-910", "PANDEX P-895", "PANDEX 4030", "PANDEX 4110", and the like manufactured by DIC Corporation can be obtained and used under their trade names.

These acrylic resins, vinyl chloride resins, cellulose resins, polyester resins, and polyurethane resins may be used alone, but preferably a mixture of two or more of these resins is used, and more preferably a resin obtained by mixing an acrylic resin and a vinyl chloride resin is used. The content ratio of the acrylic resin to the vinyl chloride resin can be controlled to meet the requirements of coloration, drying, coating film properties, and printability required for non-aqueous ink composition. When mixing the acrylic resin and the vinyl chloride resin, the mixing ratio is not particularly limited and can be changed as suitable.

These resins have a weight average molecular weight of preferably 10,000 or more, more preferably 15,000 or more, even more preferably 20,000 or more, and further preferably 25,000 or more. It is possible to achieve good chafe resistance on the printed surface of the resulting printed material. When the molecular weight of the resin is expressed in terms of absolute molecular weight |Mw|, the absolute molecular weight |Mw| is preferably 20,000 or more, more preferably 25,000 or more, and further preferably 30,000 or more. By including such a resin, the coating film resistance of the resulting printed material is able to meet the characteristics required for a non-aqueous ink composition ejected by an inkjet method.

The content of the resin in the non-aqueous ink composition according to the present embodiment is not particularly limited, but is preferably contained in a range of 0.05 mass% or more, more preferably in a range of 0.1 mass% or more, and even more preferably 0.5 mass% or more of the total non-aqueous ink composition. This can further improve the surface dryness of the resulting recorded matter. The resin contained in the non-aqueous ink composition is preferably contained in a range of 20.0 mass% or less, more preferably in a range of 15.0 mass% or less, and even more preferably in a range of 10.0 mass% or less of the total non-aqueous ink composition. This allows more effective elimination of clogging in the nozzle of the inkjet head and improves the storage stability of the non-aqueous ink composition.

The content of the pigment dispersant is preferably smaller than the content of all pigment. The content of the pigment dispersant is preferably smaller than the content of the pigment A. With this configuration, the glossiness of the printed surface of the resulting printed material is improved, color development, abrasion resistance, and solvent resistance become excellent, and the non-aqueous ink composition further meets the characteristics required for a non-aqueous ink composition ejected by an inkjet method. The ratio of the content of the pigment dispersant to the content of all pigment or the pigment A in the non-aqueous ink composition (pigment dispersant/all pigment, pigment dispersant/pigment A) is preferably less than 1.0, more preferably less than 0.8, further preferably less than 0.7, and particularly preferably less than 0.6. The lower limit is preferably 0.1 or more is preferred, 0.2 or more is more preferred, and 0.3 or more is even more preferred.

The content of the resin is preferably greater than the content of the total pigment. The content of the resin is preferably greater than the content of the pigment A. The ratio of the content of pigment dispersant to the content of the total pigment or the pigment A in the non-aqueous ink composition (pigment dispersant/total pigment, pigment dispersant/pigment A) is preferably less than 1.0, more preferably less than 0.8, even more preferably less than 0.7, and particularly preferably less than 0.6. The lower limit is preferably 0.3 or more, and more preferably 0.4 or more.

The content of the resin is preferably larger than the content of the pigment dispersant contained in the non-aqueous ink composition. This further improves the glossiness of the printed surface of the resulting printed material, as well as the color development, abrasion and solvent resistance, and further satisfies the characteristics required for a non-aqueous ink composition ejected by an inkjet method.

Specifically, the ratio of the content of the pigment dispersant to the content of the resin (pigment dispersant/resin) in the non-aqueous ink composition is preferably less than 1.0, more preferably less than 0.8, even more preferably less than 0.7, particularly preferably less than 0.6, and most preferably less than 0.4. The lower limit is preferably 0.1 or more, more preferably 0.15 or more, and further preferably 0.2 or more.

In the present invention, the content of the resin is preferably greater than the sum of the content of the pigment (or pigment A) and the pigment dispersant. This further improves the glossiness of the printed surface of the resulting printed material, as well as the color development, abrasion resistance, and solvent resistance, and further satisfies the characteristics required for a non-aqueous ink composition ejected by an inkjet method. The ratio of the total content of the pigment (or pigment A) and the pigment dispersant ((pigment (or pigment A) + pigment dispersant)/resin) to the content of the resin in the non-aqueous ink composition is preferably less than **1.0,** more preferably less than 0.97, further preferably less than 0.95, and particularly preferably less than 0.9. The lower limit is preferably 0.1 or more, more preferably 0.3 or more, further preferably 0.5 or more, and particularly preferably 0.6 or more.

In the present invention, the content of the resin is preferably greater than the sum of the content of the pigment (or pigment A), the pigment dispersant and the surfactant. The ratio of the total content of the pigment (or pigment A), the pigment dispersant and the surfactant to the content of resin, ((pigment (or pigment A) + pigment dispersant + surfactant)/resin) in the non-aqueous ink composition is preferably less than 1.4, more preferably less than 1.2, and further preferably less than 1.0. The lower limit is preferably 0.5 or more, more preferably 0.6 or more.

In the present invention, the content of the resin is preferably greater than the sum of the contents of the pigment dispersant and the surfactant. The ratio of the total content of the pigment dispersant and the surfactant to the content of the resin, ((pigment dispersant + surfactant)/resin) in the non-aqueous ink composition is preferably less than 1.0, more preferably less than 0.8, and further preferably less than 0.6. The lower limit is preferably 0.1 or more, more preferably 0.2 or more, and particularly preferably 0.3 or more.

In the present invention, the content of the pigment (or the pigment A) is preferably greater than the sum of the contents of the pigment dispersant and the surfactant. The ratio of the sum of the contents of the pigment dispersant and the surfactant to the content of the pigment (or pigment A) ((pigment dispersant + surfactant)/pigment resin (or pigment A)) in the non-aqueous ink composition is preferably less than 1.0, more preferably less than 0.8, and further preferably less than 0.6. The lower limit is preferably 0.1 or more, more preferably 0.2 or more, and further preferably 0.3 or more.

### [Organic Solvent]

The non-aqueous ink composition according to the present embodiment contains an organic solvent. The organic solvent is capable of dispersing or dissolving each component contained in the non-aqueous ink composition according to the present embodiment. The organic solvent is not particularly limited. From the viewpoint of dispersing the pigment containing the pigment A and achieving the effect of the invention more effectively, the organic solvent preferably contains an organic solvent B (at least one selected from the group consisting of alkylamide solvent, cyclic amide solvent, and cyclic ester solvent). Further, from the viewpoint of making the non-aqueous ink composition satisfactorily ejectable and achieving the effect of the present invention more effectively, the organic solvent preferably contains an organic solvent C (glycol ether dialkyl solvent).

The alkylamide solvent, cyclic amide solvent, and cyclic ester solvent contained in the organic solvent B will be individually described below.

### [Organic Solvent B]

### (1) Alkylamide Solvent

Alkylamide solvents are compounds having an alkyl group (CₙH₂ₙ₊₁-) and a -C(=O)-N- group (amide bond), and is a solvent consisting of a compound composed of a hydrogen atom or an alkyl group and a -C(=O)-N- group. Compounds having the following structure can be preferably used as the alkylamide solvent. 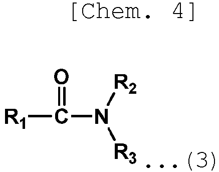 (In Formula (3), R₁ is a hydrogen atom or an alkyl group having 1 to 4 carbon atoms, and R₂ and R₃ each independently represent a hydrogen atom or an alkyl group having 1 to 4 carbon atoms.

Note that R₂ and R₃ in Formula (3) are preferably an alkyl group having from 1 to 4 carbon atoms, more preferably an alkyl group having from 2 to 4 carbon atoms.

Specific examples of the alkylamide solvent include alkoxyamide solvents such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N,N-dimethyl-3-butoxypropanamide; formamide, acetamide, propanamide, butanamide, isobutylamide, pentanamide, N-methylformamide, N-methylacetamide, N-methylpropanamide, N-methylbutanamide, N-methylisobutylamide, N-methylpentanamide, N-ethylformamide, N-ethylacetamide, N-ethylpropanamide, N-ethylbutanamide, N-ethylisobutylamide, N-ethylpentanamide, N-propylformamide, N-propylacetamide, N-propylpropanamide, N-propylbutanamide, N-propylisobutylamide, N-propylpentanamide, N-isopropylformamide, N-isopropylacetamide, N-isopropylpropanamide, N-isopropylbutanamide, N-isopropylisobutylamide, N-isopropylpentanamide, N-butylformamide, N-butylacetamide, N-butylpropanamide, N-butylbutanamide, N-butylisobutylamide, N-butylpentanamide, N,N-dimethylformamide, N,N-dimethylacetamide, N,N-dimethylpropanamide, N,N-dimethylbutanamide, N,N-dimethylisobutylamide, N,N-dimethylpentanamide, N,N-diethylformamide, N,N-diethylacetamide, N,N-diethylpropanamide, N,N-diethylbutanamide, N,N-diethylisobutylamide, N,N-diethylpentanamide, N,N-dipropylformamide, N,N-dipropylacetamide, N,N-dipropylpropanamide, N,N-dipropylbutanamide, N,N-dipropylisobutylamide, N,N-dipropylpentanamide, N,N-diisopropylformamide, N,N-diisopropylacetamide, N,N-diisopropylpropanamide, N,N-diisopropylbutanamide, N,N-diisopropylisobutylamide, N,N-diisopropylpentanamide, N,N-dibutylformamide, N,N-dibutylacetamide N,N-dibutylpropanamide, N,N-dibutylbutanamide, N,N-dibutylisobutylamide, N,N-dibutylpentanamide, N-ethyl-N-methylformamide, N-ethyl-N-methylacetamide, N-ethyl-N-methylpropanamide, N-ethyl-N-methylbutanamide, N-ethyl-N-methylisobutylamide, N-ethyl-N-methylpentanamide, N-methyl-N-propylformamide, N-methyl-N-propylacetamide, N-methyl-N-propylpropanamide, N-methyl-N-propylbutanamide, N-methyl-N-propylisobutylamide, N-methyl-N-propylpentanamide, N-ethyl-N-propylformamide, N-ethyl-N-propylacetamide, N-ethyl-N-propylpropanamide, N-ethyl-N-propylbutanamide, N-ethyl-N-propylisobutylamide, and N-ethyl-N-propylpentanamide. Among these, from the viewpoint of especially achieving the effect of the present invention, N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide are preferred, and the non-aqueous ink composition particularly preferably contains at least one selected from the group consisting of N,N-diethylformamide, N,N-diethylpropanamide, and N,N-diethylacetamide.

The content of the alkylamide solvent is not particularly limited, but the lower limit of the content of the alkylamide solvents is preferably in the range of 1 mass% or more, more preferably in the range of 5 mass% or more, and further preferably in the range of 8 mass% or more of the total non-aqueous ink composition.

The upper limit of the content of the alkylamide solvent is preferably 90 mass% or less, more preferably 80 mass% or less, and even more preferably 75 mass% or less in the total non-aqueous ink composition.

### (2) Cyclic Amide Solvent

Cyclic amide solvents are solvents having a cyclic structure and a -C(=O)-N- group in the cyclic structure. Compounds having the following structure can be preferably used as the cyclic amide solvent. 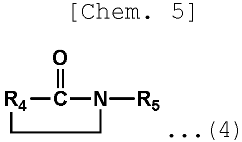 (In Formula (4), R₄ is an alkylene group having 3 to 5 carbon atoms, and R₅ is a hydrogen atom or an alkyl group having 1 to 2 carbon atoms.)

Specific examples of the cyclic amide solvent include oxazolidinone solvents such as 3-methyl-2-oxazolidinone, 3-ethyl-2-oxazolidinone, and N-vinylmethyloxazolidinone; imidazolidinone solvents such as 1,3-dimethyl-2-imidazolidinone, 1-methyl-3-ethyl-2-imidazolidinone, and 1,3-diethyl-2-imidazolidinone; and N-methylcaprolactam, N-ethylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, and N-methyl-ε-caprolactam. Among these, from the viewpoint of particularly achieving the effects of the present invention, N-methylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, and N-methyl-ε-caprolactam are preferred, and the non-aqueous ink composition particularly preferably contains at least one selected from the group consisting of ε-caprolactam, N-methylcaprolactam, and N-vinylcaprolactam.

The content of the cyclic amide solvent is not particularly limited, but the lower limit of the content of the cyclic amide solvent is preferably in the range of 1 mass% or more, more preferably in the range of 5 mass% or more, and even more preferably in the range of 8 mass% or more in the total non-aqueous ink composition.

The upper limit of the content of the cyclic amide solvent is preferably 90 mass% or less, more preferably 80 mass% or less, and even more preferably 75 mass% or less in the total non-aqueous ink composition.

### (3) Cyclic Ester Solvent

Solvents having a cyclic ester structure include cyclic carbonate ester solvents and lactone solvents. As the lactone solvent, for example, those having the following structure are preferably used. 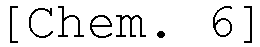 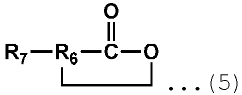 (In Formula (5), R₆ is an alkylene group having 3 to 5 carbon atoms, and R₇ is a hydrogen atom or an alkyl group having 1 to 2 carbon atoms.) R₆ is more preferably an alkylene group having 4 to 5 carbon atoms, more preferably an alkylene group having 5 carbon atoms.

Lactone solvents include γ-butyrolactone, δ-valerolactone, δ-hexanolactone, ε-caprolactone, γ-valerolactone, γ - hexalactone, γ-heptalactone, γ-octalactone, γ-nonalactone, γ-decalactone, γ-undecalactone, δ-heptalactone, δ-octalactone, δ-nonalactone, δ-decalactone, and δ-undecalactone. Among these, γ-butyrolactone, δ-valerolactone, δ-hexanolactone, ε-caprolactone, and γ-valerolactone are more preferred, and ε-caprolactone is more preferred. Propylene carbonate and ethylene carbonate are examples of cyclic carbonates.

The content of the cyclic ester solvent is not particularly limited, but the lower limit of the content of the cyclic ester solvent is preferably in the range of 1 mass% or more, more preferably 5 mass% or more, and even more preferably 8 mass% or more in the total non-aqueous ink composition.

The upper limit of the content of the cyclic ester solvent is preferably 90 mass% or less, more preferably 70% or less, and even more preferably 50% or less in the total non-aqueous ink composition.

By including the organic solvent B, the pigment containing the pigment A can be dispersed more effectively, and the storage stability and cleaning recovery properties of the non-aqueous ink composition can be improved. Furthermore, the non-aqueous ink composition has high surface dryness on a base material, which reduces printing bleeding and makes printed text clearer.

The organic solvent B is sufficiently effective when it contains at least one of the alkylamide solvent, the cyclic amide solvent, and the cyclic ester solvent, and two or more kinds of the organic solvent B may be mixed. By mixing two or more types of solvents, the balance of storage stability, component suitability, surface dryness, and cleaning recovery can be set as desired. When two or more solvents are mixed, the lower limit of the total content of the organic solvent B is preferably in the range of 1 mass% or more, more preferably 5 mass% or more, and further preferably in the range of 10 mass% or more in the total non-aqueous ink composition. The upper limit of the total content of the organic solvent B is preferably 90 mass% or less in the total non-aqueous ink composition.

### [Organic Solvent C]

The organic solvent C is a glycol ether dialkyl solvent in which the OH groups at both ends of glycol are alkyl substituted, and is represented by the general formula below.

Rₐ-(-O-R_{b}-)-O-R_{c} ... (2)

(In Formula (2), Rₐ is an optionally branched alkyl group having 1 to 8 carbon atoms, R_{b} is an optionally branched alkylene group having 1 to 4 carbon atoms, and R_{c} is an optionally branched alkyl group having 1 to 8 carbon atoms. n is an integer from 1 to 4.)

Note that Rₐ is preferably an optionally branched alkyl group having 1 to 4 carbon atoms. R_{b} is preferably an optionally branched alkylene group having 1 to 3 carbon atoms. R_{c} is preferably a hydrogen atom or an optionally branched alkyl group having 1 to 4 carbon atoms.

Organic solvents represented by Formula (2) are, for example, dialkyl ethers of polyhydric alcohols such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether.

From the perspective of penetration into the base material onto which the non-aqueous ink composition is ejected, labelling ease at the surface of the base material, and drying properties, diethylene glycol dimethyl ether, diethylene glycol diethyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, and tripropylene glycol ethyl methyl ether are preferred.

It is also preferable to combine two or more of these glycol ether solvents having different flash points. By including a glycol ether solvent with a high flash point (e.g., a flash point of 70°C or higher), a non-aqueous ink composition with high cleaning recovery properties is achieved. By including a glycol ether solvent with a low flash point (e.g., flash point below 70°C), a non-aqueous ink composition with high surface dryability on the base material is achieved. By including a glycol ether solvent with a flash point of 70°C or higher and a glycol ether solvent with a flash point of less than 70°C, it is possible to achieve both high cleaning recovery and surface dryness on the base material, resulting in a non-aqueous ink composition that is particularly effective in achieving the effects of the invention.

More preferably, the non-aqueous ink composition contains the organic solvent B (at least one selected from the group consisting of an alkylamide solvent, a cyclic amide solvent, and a cyclic ester solvent) and the organic solvent C. It is possible for the non-aqueous ink composition to achieve both storage stability, high cleaning recovery and surface dryness on the base material, resulting in a non-aqueous ink composition that is particularly effective for the present invention.

### [Other Organic Solvent]

The non-aqueous ink composition according to the present embodiment may contain an organic solvent other than those listed above. Specific examples include glycol ether monoalkyl, in which one of the OH groups of glycol is alkyl substituted. Examples of the glycol ether monoalkyl solvent include alkylene glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, 2-ethylhexyl) ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, and tripropylene glycol monomethyl (or ethyl, propyl, isopropyl, n-butyl, isobutyl, t-butyl) ether, tetrapropylene glycol monomethyl ether (or ethyl, propyl, isopropyl, n-butyl, isobutyl, t-butyl, and 2-ethylhexyl).

Other solvents other than glycol ether solvents may also be included. Specifically, acetate solvents such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, dipropylene glycol diacetate, 1-methoxy-2-propyl acetate, 3-methoxybutyl acetate, 2-methyl butyl acetate, 3-methoxybutyl acetate, and cyclohexyl acetate; alkyl alcohols having 1 to 5 carbons atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohol solvents such as 3-methoxy-3-methyl-1-butanol, 3-methoxy-1-propanol, 1-methoxy-2-propanol, and 3-methoxy-n-butanol; ketones or keto alcohols such as acetone, diacetone alcohol, methyl ethyl ketone, methyl n-propyl ketone, methyl isopropyl ketone, methyl-n-butyl ketone, methyl isobutyl ketone, methyl-n-amyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, and acetyl ketone; ethers such as tetrahydrofuran, dioxane, and dibutyl ether; oxyethylene or oxypropylene copolymers such as polyethylene glycol, and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylol ethane, trimethylol propane, and 1,2,6-hexanediol; tetravalent alcohols such as meso-erythritol and pentaerythritol; alkanolamines such as monoethanolamine, diethanolamine, triethanolamine, N-methylethanolamine, N-ethylethanolamine, N-butylethanolamine, N-methyl diethanolamine, N-ethyl diethanolamine, and N-butyl diethanolamine; acetic acid esters such as methyl acetate, ethyl acetate, n-propyl acetate, isopropyl acetate, n-butyl acetate, isobutyl acetate, hexyl acetate, and octyl acetate; lactic acid esters such as methyl lactate, ethyl lactate, butyl lactate, propyl lactate, ethyl hexyl lactate, amyl lactate, and isoamyl lactate; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isonononane, dodecane, and isododecane; unsaturated hydrocarbons such as 1-hexene, 1-heptene, and 1-octene; cyclic saturated hydrocarbons such as cyclohexane, cycloheptane, cyclooctane, cyclododecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and **N-**formylmorpholine; and terpene solvents. It is preferable to select a solvent with an appropriate HLB value according to the resin and dispersant to be combined.

The content of the other organic solvent is not limited, but the lower limit of the content of the other organic solvent is preferably in the range of 10 mass% or more, more preferably in the range of 20 mass% or more, and even more preferably in the range of 30 mass% or more. The upper limit of the content of the other organic solvent is preferably in the range of 85 mass% or less, more preferably in the range of 80 mass% or less, and even more preferably in the range of 75 mass% or less.

### [Surfactant]

In the non-aqueous ink composition according to the present embodiment, a surfactant may be added for the purpose of inhibiting volatilization and preventing solidification of the non-aqueous ink composition in equipment such as nozzle sections and tubes, for the purpose of re-dissolving the ink composition when it solidifies, for the purpose of reducing surface tension and improving wettability with the recording medium (base material), for the purpose of suppressing bleeding of the ink composition on the base material, improving the chafe resistance of the coating film, and further improving the glossiness of the recorded matter. Note that surfactant also includes those called surface adjustment agents, leveling agents, defoaming agents, and the like.

Among these, it is preferred that the surfactant contains a surfactant having a siloxane skeleton. The pigment A tends to aggregate easily in the non-aqueous ink composition, and the volume average particle size tends to increase. When this occurs, the glossiness of the resulting recorded matter may decrease. By including a surfactant having a siloxane skeleton in the non-aqueous ink composition according to the present embodiment, the glossiness of the resulting recorded matter can be improved even when the pigment A is included. Furthermore, when the non-aqueous ink composition contains a surfactant having a siloxane skeleton, printing bleeding is reduced and a recorded matter with improved chafe resistance can be obtained.

As the surfactant with a siloxane skeleton, polyester-modified silicone and polyether-modified silicone are preferred, and specific examples include BYK-313, 315N, 322, 326, 331, 347, 348, BYK-UV3 500, 3510, 3530, 3570 (all manufactured by Bic Chemie Japan).

The non-aqueous ink composition may also contain a surfactant different from the surfactant with a siloxane backbone. For example, polyoxyalkylene alkyl ethers such as nonionic P-208, P-210, P-213, E-202S, E-205S, E-215, K-204, K-220, S-207, S-215, A-10R, A-13P, NC-203, NC-207 (manufactured by Nippon Yushi Co., Ltd.), Emulgen 106, 108, 707, 709, A-90, A-60 (manufactured by Kao Co., Ltd.), Florene G-70 D-90, D-90, TG-740W (manufactured by Kyoeisha Chemical Co., Ltd.), Poem J-0081HV (manufactured by Riken Vitamin Co., Ltd.), Adekatol NP-620, NP-650, NP-660, NP-675, NP-683, NP-686, Adekacol CS-141E, TS-230E (manufactured by Adeka Corporation); Solgen 30V, 40, TW-20, TW-80, Neugen CX-100 (manufactured by Dai-ichi Kogyo Seiyaku Co., Ltd.); as fluorinated surfactants, fluorine modified polymers are preferred, where specific examples include BYK-340 (manufactured by Bic Chemie Japan), MEGAFACE (DIC Corporation); as acetylene glycol surfactants, specific examples include Surfynol^{®} 82, 104, 465, 485, and TG (all manufactured by Air Products Ltd.), and Olfine^{®} STG and E1010 (both manufactured by Nissin Chemical Co., Ltd.). As the surfactant, any anionic, cationic, amphoteric or nonionic surfactant can be used, including but not limited to the above.

The non-aqueous ink composition according to the present embodiment may contain these surfactants together with the surfactant having a siloxane backbone, or may contain these surfactants without the surfactant having a siloxane backbone.

In the non-aqueous ink composition according to the present embodiment, the content of the surfactant is not particularly limited, but the lower limit of the content of the surfactant is preferably in the range of 0.01 mass% or more, more preferably in the range of 0.05 mass% or more, and even more preferably in the range of 0.1 mass% or more. The upper limit of the content of the surfactant is preferably in the range of 5.0 mass% or less, more preferably in the range of 4.0 mass% or less, even more preferably in the range of 3.0 mass% or less, and even more preferably in the range of 1.5 mass% or less. When the content of the surfactant is within the above range, it is possible to achieve excellent coating film properties, such as chafe resistance, solvent resistance, and water resistance of the ink coating film of the printed material.

### [Other Components]

The non-aqueous ink composition according to the present embodiment may contain known additives such as stabilizers such as antioxidants and UV absorbers, epoxides, polyvalent carboxylic acids, pH adjusters, disinfectants, preservatives, odor control agents, charge regulators, and wetting agents as optional components. Specific examples of the antioxidant include hindered phenol antioxidants, amine antioxidants, phosphorus antioxidants, sulfur antioxidants, and hydrazine antioxidants. Specific examples include BHA (2,3-butyl-4-oxyanisole) and BHT (2,6-di-t-butyl-p-cresol). Benzophenone compounds or benzotriazole compounds can be used as the UV absorber. Examples of the epoxide include epoxy glycerides, epoxy fatty acid monoesters, and epoxy hexahydrophthalates, such as Adekasizer O-130P and Adekasizer O-180A (manufactured by ADEKA). Specific examples of the polyvalent carboxylic acid include citric acid and maleic acid.

### <<2. Method of Producing Non-aqueous Ink Composition>>

The non-aqueous ink composition according to the present embodiment can be produced by mixing the organic solvent, the pigment containing the pigment A, and other components (e.g., resin) using a paint shaker. At this time, each component may be dispersed in the form of zirconia beads. The resulting non-aqueous ink composition may be adjusted to a desired amount of dissolved oxygen or dissolved nitrogen by degassing or the like as necessary.

Although the non-aqueous ink composition is a non-aqueous ink composition that does not intentionally contain moisture, water may enter the composition from raw material origin and during the manufacturing process. It is desirable to keep the moisture content in the non-aqueous ink composition as low as possible. Excessive moisture content causes poor storage stability and ejectability, and also increases the risk of generation of solid components and the like. The upper limit of the moisture content in the non-aqueous ink composition is preferably 1.0 mass% or less, particularly preferably 0.5 mass% or less, and more preferably 0.3 mass% or less in the total non-aqueous ink composition.

In this case, it is preferable to dry the organic solvent in advance. By drying the organic solvent in advance, the amount of moisture in the non-aqueous ink composition can be reduced. The organic solvent can be dried by, for example, spraying dried inert gas (e.g., nitrogen gas) under an inert gas atmosphere such as nitrogen for a specified time, distilling and refining the organic solvent, allowing the organic solvent to permeate through a semipermeable membrane that selectively permeates water, or causing a water adsorbent that adsorbs water to selectively absorb water in the organic solvent.

### <<3. Recording Method using Ink Composition>>

A recording method according to the present embodiment is a recording method in which the above-described non-aqueous ink composition is ejected onto the surface of a base material by an inkjet method. The non-aqueous ink composition of the present invention satisfies the characteristics required for a non-aqueous ink composition ejected by an inkjet method. The recording method according to the present embodiment also satisfies the characteristics required for a non-aqueous ink composition ejected by an inkjet method. The method of ejection by an inkjet method may be a piezo method using a piezoelectric element or a thermal method using a heating element, but no limitation is intended.

### <<4. Method of Producing Recorded Matter >>

The recording method using the above-described ink composition can also be defined as a method of producing a recorded matter. The method of producing a recorded matter according to the present embodiment also satisfies the characteristics required for a non-aqueous ink composition ejected by an inkjet method.

### <<5. Recorded Matter >>

Each layer constituting the recorded matter produced by the method of producing a recorded matter according to the embodiment described above will now be described.

### [Media (recording media)]

A base material (recording medium) that can be used in the recording method according to the present embodiment is not particularly limited and can be a non-absorbent base material such as a resin base material, metal, or plate glass, an absorbent base material such as paper or fabric, and a base material with a surface coating such as a base material with a receptive layer.

Non-absorbent base materials include resin base materials such as polyester resin, polypropylene synthetic paper, vinyl chloride resin (polyvinyl chloride polymer), polyimide resin, acrylic, PET, polycarbonate, PE, PP, and metal, metal foil-coated paper, glass, synthetic rubber, and natural rubber.

Absorbent base materials include groundwood paper, ordinary grade paper, woodfree paper, synthetic paper, cotton, chemical fiber fabrics, silk, linen, woven fabrics, non-woven fabrics, and leather.

Substrates with a surface coating include coated paper, art paper, cast coated paper, lightweight coated paper, and micro-coated paper. Various base materials having an ink-absorbing layer can also be used.

Among these, since the non-aqueous ink composition is a non-aqueous ink composition that does not contain water, a base material whose surface consists mainly of resin is preferable. In particular, when the non-aqueous ink composition contains an alkylamide solvent, printing bleeding on the medium (recording medium) whose surface consists of resin is reduced and printing becomes clearer. The non-aqueous ink composition may also be used on a resin base material (so-called resin base material for laminating) where it is assumed that a film is layered on the recording surface of the recorded matter. A base material (recording medium) with a surface made of hard or soft polyvinyl chloride polymer is particularly preferred. An example of a base materials (recording media) with a surface made of polyvinyl chloride polymer is a polyvinyl chloride base material (film or sheet).

### [Recording Layer]

The recording layer is a layer formed by volatilization of the solvent contained in the non-aqueous ink composition, and is a layer on which a desired image is formed. When ejected by an inkjet method, the non-aqueous ink composition will meet the characteristics required for a non-aqueous ink composition ejected by an inkjet method.

### [Other Layers]

The recorded matter may further include a layer having a desired function on the upper surface of the recording layer. For example, an overcoat layer containing at least one of resin and wax may be formed for the purpose of further imparting chafe resistance and glossiness to the recorded matter. In addition, a layer may be formed that expresses an unevenness on the surface (matte surface) by providing the layer with fillers or by varying the film thickness on a pixel-by-pixel basis. Further, a weatherproof layer containing an ultraviolet absorber, a light stabilizer, or the like, or a luminosity layer containing luminosity pigments may be formed to impart the recorded matter with weather resistance.

### <<6. Ink Set>>

An ink set according to the present embodiment is an ink set including at least the non-aqueous ink composition. For example, when the non-aqueous ink composition is orange ink, conventionally known yellow ink, magenta ink, cyan ink, black ink, light magenta ink, light cyan ink, light black ink, green ink, blue ink, and red ink can be combined to expand the color reproducibility in addition to achieving the effects of the present invention.

The ink set may also be an ink set that includes the non-aqueous ink composition and white ink or glitter ink such as metallic ink or pearl ink. The ink set may also be an ink set that includes the non-aqueous ink composition and clear ink, pre-coating ink, or overprint ink.

### <<7. Inkjet Recording Device>>

The non-aqueous ink composition satisfies the characteristics required for a non-aqueous ink composition ejected by an inkjet method, even when using a pigment including a diketopyrrolopyrrole pigment as the pigment. Thus, by using an inkjet recording device equipped with an ink cartridge (equivalent to a storage container) filled with the non-aqueous ink composition and ejecting the ink onto the surface of a base material by the inkjet method, it is possible to satisfy the characteristics required for a non-aqueous ink composition, such as improved glossiness on the printed surface of the resulting printed material.

The inkjet recording device can be any conventionally known device. For example, inkjet printers such as VersaArt RE-640, manufactured by Roland DG Corporation, can be used.

As an example of the configuration of the inkjet recording device, an on-carriage type, serial printer type inkjet recording device will be described. However, an inkjet recording device capable of implementing the recording method according to the present embodiment can also be an off-carriage type inkjet recording device in which the ink cartridge is fixed outside the device, or a line printer type inkjet recording device in which the inkjet head ejects the ink composition onto the recording medium (base material) without moving.

The inkjet recording device is preferably equipped with a heating mechanism and a fixing mechanism for fixing the base material. The heating mechanism provided in the inkjet recording device controls the base material surface temperature to dry the non-aqueous ink composition that has landed on the base material (recording medium), thereby enabling the organic solvent contained in the non-aqueous ink composition to be volatilized.

Additionally, the fixing mechanism that fixes the base material makes it possible to dry the non-aqueous ink composition while the base material (recording medium) is fixed, thereby suppressing uneven heat application due to bending of the base material caused by heating. This makes it possible to effectively dry the non-aqueous ink composition that has landed on the base material (recording medium).

The heating mechanism provided in the inkjet recording device may be a pre-heater, a platen heater, or an after-heater, or may be a mechanism that blows warm air onto the recorded matter. The heating mechanism may also be a combination of several of these heating mechanisms.

The surface temperature of the base material heated by the heating mechanism is not limited as long as the organic solvent contained in the non-aqueous ink composition can be volatilized. The lower limit of the surface temperature of the base material is preferably 20°C or more, more preferably 30°C or more, and even more preferably 40°C or more. The upper limit of the surface temperature of the base material is preferably 70°C or less, more preferably 60°C or less, and even more preferably 50°C or less.

The fixing mechanism for fixing the base material can be a fixing mechanism that fixes the base material by using a predetermined jig or a fixing mechanism that suctions and adsorbs the base material using negative pressure, with no particular limitation.

The inkjet head that ejects the non-aqueous ink composition may be a piezoelectric inkjet head using a piezoelectric element or a thermal inkjet head using a heating element, with no particular limitation.

The inkjet recording device may also include a plastic tube that connects a storage container (ink cartridge, bottle, etc.) storing the non-aqueous ink composition and an inkjet ejection port from which the non-aqueous ink composition is ejected, and the non-aqueous ink composition may be supplied to the inkjet head via this plastic tube and then dispensed by the inkjet method.

The tube connected to the storage mechanism and the inkjet ejection port is preferably equipped with a valve mechanism to control the flow path of the non-aqueous ink composition. By supplying the non-aqueous ink composition from the storage mechanism to the inkjet ejection port via the valve mechanism, since a mechanism is provided to eliminate nozzle clogging, the ejection stability of the non-aqueous ink composition can be further improved.

As mentioned above, the inkjet recording device according to the present embodiment can also be used with single color inks such as yellow, magenta, cyan, and black, as well as mixed color inks and the like, such as light magenta, light cyan, light black, orange, green, red, white, metallic, pearl, clear, pre-coated, and over-print inks, and there are no restrictions on the order of colors to be printed or the position and configuration of the head. The inkjet recording device may or may not be equipped with a take-up mechanism for the recording media (base material), a drying mechanism for drying the base material surface, and an ink circulation mechanism.

### EXAMPLES

The invention is described in more detail below by way of examples, but the invention is not limited in any way to these examples.

### 1. Preparation of Non-aqueous Ink Composition

The organic solvent, resin, dispersant, and pigment (color material), respectively, were mixed to the proportions shown in the table below for each component to prepare non-aqueous ink compositions of examples and comparative examples. Specifically, the non-aqueous ink compositions were prepared by being dispersed in the form of zirconia beads using a paint shaker until the cumulative 90% particle size D90 was 450 nm or less. The unit is mass%.

The cumulative volume-based 90% particle size D90 of the pigment in the non-aqueous ink composition was measured using a particle size distribution analyzer (NANOTRACWAVE particle size analyzer manufactured by Microtrac Bell Inc.)

### 2. Evaluation

### (Ejection Stability)

The ejection stability of the non-aqueous ink compositions of the examples, comparative examples, and reference examples were evaluated. Specifically, an inkjet printer (product name VersaArt RE-640, manufactured by Roland DG Corporation was used) was filled with the non-aqueous ink composition and solid and fine lines were printed on the recording medium (glued polyvinyl chloride film (IMAGin JT5829R: manufactured by MACtac)) in a high-speed printing mode (360x720 dpi) by continuous printing at a base material surface temperature of 40°C, and the recording medium was visually observed and evaluated for the presence of missing dots, uneven lines, and ink splattering (referred to as "ejection stability" in the table).

### Evaluation Criteria

A: Fine lines are reproduced correctly. B: Fine lines are generally reproduced correctly, but slight deviations in landing position are observed. C: Fine lines cannot be reproduced due to misalignment of landing position. A and B are within a usable range.

### (Storage Stability)

The storage stability of the non-aqueous ink compositions of the examples and comparative examples was evaluated. Specifically, the non-aqueous ink compositions were sealed in a glass bottle and stored at 60°C for one month, and the rate of change from the viscosity before storage was determined. The viscosity of the ink was measured at 20°C using a falling-ball viscometer (AMVn manufactured by Anton Paar). A: The rate of change is less than 10%. B: The rate of change is 10% or more and less than 20%. C: The rate of change is 20% or more. A and B are within an actual usable range.

### (Color Development)

The color development of the non-aqueous ink compositions of the examples and comparative examples were evaluated. Specifically, using an inkjet printer (product name VersaArt RE-640, manufactured by Roland DG Corporation was used), a solid color image was printed on a recording medium (glued polyvinyl chloride film (IMAGin JT5829R: manufactured by MACtac)) in a high-quality printing mode (1440x720 dpi). Saturation was determined based on JIS Z 8721, using X-Rite eXact (manufactured by X-Rite Inc.) with a viewing angle of 2°, a measurement range of 4 mmϕ, and a D65 light source. (In the table, the term "color development" is used).

### Evaluation Criteria

A: Saturation is 90 or higher. B: Saturation is 70 or more and less than 90. C: Saturation is less than 70. A and B are within an actual usable range.

### (Glossiness)

Glossiness of the non-aqueous ink compositions of the examples, comparative examples, and reference examples was evaluated. Specifically, printed materials were prepared in the same way as in the above evaluation of color development, and the 20° gloss of the printed materials was measured using a handy gloss meter Phopoint IQ-S (manufactured by Konica Minolta).

(In the table, the term "glossiness" is used). Evaluation Criteria
A: 20° gloss is 60 or more
B: 20° gloss is 55 or more and less than 60
C: 20° gloss is less than 55
A and B are within an actual usable range.

### (Abrasion Resistance)

Abrasion resistance of the non-aqueous ink compositions of the examples, comparative examples, and reference examples was evaluated. Specifically, printed materials were prepared in the same manner as in the above evaluation of color development and glossiness. The printing surfaces of the printed materials were rubbed with a dry cotton cloth 50 times with a load of 200g and visually evaluated for abrasion resistance. Evaluation Criteria
A: No abrasion marks were found on the printing surface. B: Slight abrasion marks were observed on the printing surface, but within a practically acceptable range. C: Clear peeling was observed on the printing surface. A and B are within an actual usable range.

### (Solvent Resistance)

Solvent resistance of the non-aqueous ink compositions of the examples, comparative examples, and reference examples was evaluated. Specifically, in the same manner as the above evaluation of abrasion resistance, the printing surfaces of the printed materials were rubbed with a cotton cloth impregnated with a 50 mass% alcohol solution under a load of 200g for 50 rounds and visually evaluated for abrasion resistance. Evaluation Criteria
A: No abrasion marks were found on the printing surface. B: Slight abrasion marks were observed on the printing surface, but within a practically acceptable range. C: Clear peeling was observed on the printing surface. A and B are within an actual usable range.

**[Table 1]**

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|---|
| | Pigment | PR254-a | 3.0 | | | 3.0 | 3.0 | 3.0 | 3.0 | 3.0 | | | | 3.0 | 2.0 | | | 2.5 |
| | | PR254-b | | 3.0 | | | | | | | 4.0 | 2.0 | | | | | 2.5 | |
| | | PR254-c | | | 3.0 | | | | | | | | 4.0 | | | 4.0 | | |
| | Dispersant | Dispersant-a (S32000) | 1.0 | 1.0 | 1.0 | 1.0 | | | 0.6 | 2.4 | | | 1.0 | 1.0 | 1.0 | | 0.5 | |
| | | Dispersant-b (S33000) | | | | | 1.0 | 1.0 | | | 0.5 | 0.5 | | | | 1.0 | | |
| | | Dispersant-c (S36000) | | | | | | | | | 0.5 | | 1.0 | | | | | 0.5 |
| | Resin | Resin-a (acrylic) | 4.0 | 4.0 | 4.0 | 3.0 | 5.0 | 5.0 | 4.0 | 4.0 | 4.0 | 2.0 | 5.0 | 4.0 | 4.0 | 5.0 | 2.0 | |
| | | Resin-b (vinyl chloride) | 1.0 | 1.0 | 1.0 | 0.5 | | | | | 1.0 | 2.0 | 2.0 | 1.0 | 1.0 | 1.0 | 2.0 | 2.0 |
| | | Resin-c (CAB) | | | | | | | 1.0 | 1.0 | 1.0 | | | | | | | 1.0 |
| | Solvent B | γ-butyrolactone | 15.0 | 15.0 | 15.0 | | | | | | 10.0 | 20.0 | 20.0 | 15.0 | 15.0 | | 20.0 | 20.0 |
| | | γ-valerolactone | | | | 15.0 | | | | | | | | | | | | |
| Ink composition | | Propylene carbonate | | | | | 15.0 | | | | | | | | | | 10.0 | |
| | | N.N-Diethylpropionamide | | | | | | 15.0 | | | | | | | | | | |
| | | N,N-Diethylformamide | | | | | | | 15.0 | | | | | | | 20.0 | | |
| | | N-Methyl-2-pyrrolidone | | | | | | | | 15.0 | | | | | | | | |
| | Solvent C | Diethylene glycol diethyl ether | 65.5 | 65.5 | 65.5 | 67.0 | 10.0 | 60.0 | | | 53.6 | 38.3 | | 65.5 | 66.5 | 48.5 | | 38.0 |
| | | Diethylene glycol methyl ethyl ether | | | | | 65.5 | | 60.4 | 58.6 | 200 | 30.0 | 60.5 | | | | 62.5 | 30.5 |
| | | Dipropylene glycol dimethyl ether | | | | | | 10.0 | | | | | | | | | | |
| | | Diethylene glycol butyl methyl ether | 10.0 | 10.0 | 10.0 | | | | 15.0 | 15.0 | | | | 10.0 | 10.0 | | | |
| | | Triethylene glycol monobutyl ether | | | | 10.0 | | | | | 5.0 | | 6.0 | | | | | |
| | | Dipropylene glycol monomethyl ether | | | | | | 5.5 | | | | 5.0 | | | | 20.0 | | 5.0 |
| | Surfactant | Surfactant-a (BYK-331) | 0.5 | 0.5 | 0.5 | 0.5 | 0.5 | 0.5 | | | 0.2 | 0.2 | 0.5 | 0.5 | 0.5 | | 0.5 | |
| | | Surfactant-b (BYK-3500) | | | | | | | 1.0 | 1.0 | 0.2 | | | | | 0.5 | | 0.5 |
| | Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Moisture (%) | | | 0.2 | 0.1 | 0.1 | 0.1 | 0.1 | 0.1 | 0.1 | 0.1 | 0.2 | 0.1 | 0.3 | 0.5 | 0.05 | 0.2 | 0.5 | 0.5 |
| Evaluation | | Ejectability | A | A | A | A | A | A | A | A | A | A | A | B | A | A | B | B |
| | | Storage stability | A | A | A | A | A | A | A | A | A | A | A | B | A | A | A | A |
| | | Color development | A | A | A | A | A | A | A | B | A | A | A | A | A | A | A | A |
| | | Glossiness | A | A | A | A | A | A | A | B | A | A | A | A | A | A | A | A |
| | | Abrasion resistance | A | A | A | B | A | A | A | B | A | A | A | B | A | A | A | A |
| | | Solvent resistance | A | A | A | B | A | A | A | B | A | A | A | A | A | A | A | A |

**[Table 2]**

| | | | Comparative Example1 | Comparative Example2 | Comparative Example3 | Comparative Example4 | Comparative Example5 | Comparative Example6 | Comparative Example7 | Comparative Example8 |
|---|---|---|---|---|---|---|---|---|---|---|
| | Pigment | PR254-a | 4.0 | | | 3.0 | 4.0 | | | 3.0 |
| | | PR254-b | | 4.0 | | | | 2.0 | | |
| | | PR254-c | | | 4.0 | | | | 3.0 | |
| | Dispersant | Dispersant-a (S32000) | 4.0 | | | 6.0 | 4.0 | | | 4.0 |
| | | Dispersant-b (S33000) | | 4.0 | | | | 3.0 | | |
| | | Dispersant-c (S36000) | | | 4.0 | | | | 6.0 | |
| | Resin | Resin-a (acrylic) | 4.0 | 1.5 | 4.5 | | 4.0 | 1.5 | 4.5 | 4.0 |
| | | Resin-b (vinyl chloride) | | 0.5 | 0.5 | | | 0.5 | 0.5 | 1.0 |
| | | Resin-c (CAB) | | | | | 1.0 | | | |
| | Solvent B | γ-butyrolactone | 15.0 | 15.0 | 15.0 | | | | | 15.0 |
| | | γ-valerolactone | | | | | | 15.0 | | |
| Ink composition | | Propylene carbonate | | | | | 15.0 | | | |
| | | N,N-Diethylpropionamide | | | | | | | | |
| | | N,N-Diethylformamide | | | | | | | | |
| | | N-Methyl-2-pyrrolidone | | | | 15.0 | | | | |
| | Solvent C | Diethylene glycol diethyl ether | 61.5 | 64.5 | 61.0 | | 61.5 | 67.5 | | |
| | | Diethylene glycol methyl ethyl ether | | | | 60.0 | | | 86.5 | |
| | | Dipropylene glycol dimethyl ether | | | | | | | | |
| | | Diethylene glycol butyl methyl ether | 10.0 | 10.0 | 10.0 | 15.0 | 10.0 | 10.0 | | |
| | | Triethylene glycol monobutyl ether | | | | | | | | |
| | | Dipropylene glycol monomethyl ether | | | | | | | | |
| | Surfactant | Surfactant-a (BYK-331) | 0.5 | 0.5 | 1.0 | | 0.5 | 0.5 | 0.5 | 0.5 |
| | | Surfactant-b (BYK-3500) | | | | 1.0 | | | | |
| | Total | | 99.0 | 100.0 | 100.0 | 100.0 | 100.0 | 100.0 | 101.0 | 27.5 |
| Moisture (%) | | | 0.2 | 0.1 | 0.1 | 0.8 | 2.0 | 1.0 | 0.3 | 0.8 |
| Evaluation | | Ejectability | B | B | B | B | C | C | C | C |
| | | Storage stability | B | B | B | C | C | C | B | C |
| | | Color development | B | C | C | B | c | C | C | C |
| | | Glossiness | C | C | C | C | C | C | C | C |
| | | Abrasion resistance | C | C | C | C | C | C | C | C |
| | | Solvent resistance | C | C | C | C | C | C | C | C |

**[Table 3]**

| | | | Reference Example1 | Reference Example2 | Reference Example3 | Reference Example4 |
|---|---|---|---|---|---|---|
| | Pigment | PB15:4 | 3 | | | |
| | | PR122 | | 3 | | |
| | | PY150 | | | 3 | |
| | | CB | | | | 3 |
| | Dispersant | Dispersant-a (S32000) | 4 | 4 | 4 | 4 |
| | | Dispersant-b (S33000) | | | | |
| | | Dispersant-c (S36000) | | | | |
| | Resin | Resin-a (acrylic) | 4 | 4 | 4 | 4 |
| | | Resin-b (vinyl chloride) | 1 | 1 | 1 | 1 |
| | | Resin-c (CAB) | | | | |
| | Solvent B | γ-butyrolactone | 15 | 15 | 15 | 15 |
| | | γ-valerolactone | | | | |
| Ink composition | | Propylene carbonate | | | | |
| | | N,N-Diethylpropionamide | | | | |
| | | N,N-Diethylformamide | | | | |
| | | N-Methyl-2-pyrrolidone | | | | |
| | Solvent C | Diethylene glycol diethyl ether | 62.5 | 62.5 | 62.5 | 62.5 |
| | | Diethylene glycol methyl ethyl ether | | | | |
| | | Dipropylene glycol dimethyl ether | | | | |
| | | Diethylene glycol butyl methyl ether | 10.0 | 10.0 | 10.0 | 10.0 |
| | | Triethylene glycol monobutyl ether | | | | |
| | | Dipropylene glycol monomethyl ether | | | | |
| | Surfactant | Surfactant-a (BYK-331) | 0.5 | 0.5 | 0.5 | 0.5 |
| | | Surfactant-b (BYK-3500) | | | | |
| | Total | | 100.0 | 100.0 | 100.0 | 100.0 |
| Evaluation | | Ejectability | A | A | A | A |
| | | Storage stability | A | A | A | A |
| | | Color development | A | A | A | A |
| | | Glossiness | A | A | A | A |
| | | Abrasion resistance | A | A | A | A |
| | | Solvent resistance | A | A | A | A |

In the tables, "PR254-a" is "CHROMOFINE RED 615EC" manufactured by Dainichi Seika Kogyo Co. (pigment A represented by Formula (1), diketopyrrolopyrrole pigment).

In the tables, "PR254-b" is "IRGAPHOR RED BT-CF" manufactured by BASF (pigment A represented by Formula (1), diketopyrrolopyrrole pigment).

In the tables, "PR254-c" is "ROMOPHTAL DPP Red BP" manufactured by BASF (pigment A represented by Formula (1), diketopyrrolopyrrole pigment).

In the tables, "PB15:4" is C.I. Pigment Blue 15:4.

In the tables, "PR122" is C.I. Pigment Red 122.

In the tables, "PY150" is C.I. Pigment Yellow 150.

In the tables, "CB" is carbon black.

In the tables, "Dispersant-a" is "Solsperse 32000" (polycaprolactone polymeric dispersant; amine value: 35 mg KOH/g) manufactured by The Lubrizol Corporation.

In the tables, "Dispersant-b" is "Solsperse 33000" (polycaprolactone polymeric dispersant; amine value: 43 mg KOH/g) manufactured by The Lubrizol Corporation.

In the tables, "Dispersant-c" is "Solsperse 36000" (polycaprolactone polymer dispersant) manufactured by The Lubrizol Corporation.

In the tables, "Resin-a" is "Paraloid B60" (acrylic resin) manufactured by Rohm and Haas.

In the tables, "Resin-b" is "Solbin CL" (vinyl chloride-vinyl acetate copolymer resin) manufactured by Nissin Chemical Co., Ltd.

In the tables, "Resin-c" is "CAB551-0.01" (cellulosic resin) manufactured by Eastman Chemical Japan.

In the tables, "Surfactant-a" is "BYK-331" (polyester-modified silicone or polyether-modified silicone) manufactured by Bic Chemie Japan.

In the tables, "Surfactant-b" is "BYK-3500" (polyester-modified silicone or polyether-modified silicone) manufactured by Bic Chemie Japan.

As can be seen from the tables above, the non-aqueous ink compositions of the examples containing pigment A (diketopyrrolopyrrole pigment) represented by Formula (1) and in which the content of the pigment dispersant is less than the content of the pigment satisfy the characteristics required for a non-aqueous ink composition ejected by an inkjet method.

On the other hand, the non-aqueous ink compositions of the comparative examples, which contain pigment A (diketopyrrolopyrrole pigment) represented by Formula (1) and in which the content of the pigment dispersant is greater than or equal to the content of the pigment, were less glossy on the printing surface of the yielded printed material and further had impaired abrasion resistance and solvent resistance, and thus do not meet the characteristics required for a non-aqueous ink composition ejected by an inkjet method.

The non-aqueous ink compositions of Reference Examples 1 to 4, which do not contain the pigment A (diketopyrrolopyrrole pigment) represented by Formula (1), met the characteristics required for non-aqueous ink compositions ejected by an inkjet method, even when the content of the pigment dispersant was higher than the content of the pigment. From this, it was confirmed that the object of the present invention, that is, the pigment aggregation in the non-aqueous ink composition, is unique to the non-aqueous ink composition containing pigment A (diketopyrrolopyrrole pigment) represented by Formula (1).

## Claims

1. A non-aqueous ink composition to be ejected by an inkjet method, the composition comprising: a pigment, a pigment dispersant, and an organic solvent, wherein
the pigment comprises a pigment A represented by Formula (1), and
a content of the pigment dispersant is smaller than a content of the pigment. 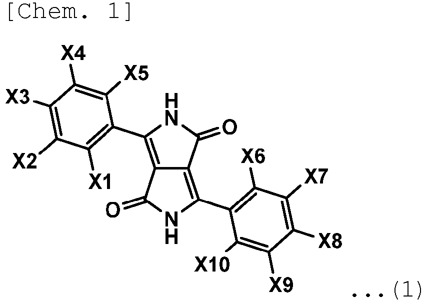 (in Formula (1), X1 to X10 each independently represent a hydrogen atom, a halogen atom, an optionally branched alkyl group having 1 to 5 carbon atoms, or an aromatic hydrocarbon group in which a hydrogen atom may be substituted, a cyano group, a nitro group, an amino group, -OH, -COOH, -COO-M⁺, - SO₃H, -SO₃⁻M⁺, a phthalimido group in which a hydrogen atom may be substituted, a phthalimidomethyl group, or a heterocyclic compound, and M⁺ represents a cation.)

2. The non-aqueous ink composition according to claim 1, wherein
a content of a resin is larger than a content of the pigment.

3. The non-aqueous ink composition according to claim 1 or 2, wherein
the content of the pigment is 1.0 mass% or more.

4. The non-aqueous ink composition according to any one of claims 1 to 3, wherein
the content of a resin is larger than a content of the pigment dispersant.

5. The non-aqueous ink composition according to any one of claims 1 to 4, wherein
(content of the pigment dispersant)/(content of a resin) is less than 0.8.

6. The non-aqueous ink composition according to any one of claims 1 to 5, wherein
the content of a resin is larger than a total content of the pigment and the pigment dispersant.

7. The non-aqueous ink composition according to any one of claims 1 to 6, wherein
the content of a resin is larger than a total content of the pigment, the pigment dispersant, and a surfactant.

8. The non-aqueous ink composition according to claim 7, wherein
(total content of the pigment dispersant and the surfactant)/(content of the resin) is 0.3 or more and less than 1.0.

9. The non-aqueous ink composition according to any one of claims 1 to 8, wherein
the content of the pigment A is 0.1 mass% or more and 8.0 mass% or less of a total mass of the non-aqueous ink composition.

10. The non-aqueous ink composition according to any one of claims 1 to 9, wherein
a content of water in the non-aqueous ink composition is 0.5 mass% or less.

11. A recording method, comprising ejecting the non-aqueous ink composition according to any one of claims 1 to 10 onto a surface of a base material using an inkjet method.

12. A method of producing a recorded matter, comprising ejecting the non-aqueous ink composition according to any one of claims 1 to 10 onto a surface of a base material using an inkjet method.

13. An ink set comprising at least the non-aqueous ink composition according to any one of claims 1 to 10.

14. A recorded matter comprising a print layer of the non-aqueous ink composition according to any one of claims 1 to 10 formed on a surface of a base material.

15. An inkjet recording device comprising a storage container filled with the non-aqueous ink composition according to any one of claims 1 to 10.
